# EUROPÄISCHE PATENTSCHRIFT

(11) **EP 0 760 931 B1**
(45) Veröffentlichungstag und Bekanntmachung des Hinweises auf die Patenterteilung: **01.03.2000**
(21) Anmeldenummer: 96908108.2
(22) Anmeldetag: 21.03.1996
(51) Int. Cl.: G01B 7/30, G01D 5/12, G01B 101/10

(54) **DREHWINKEL- ODER DREHZAHLGEBER**
SENSOR FOR DETERMINING A ROTATION ANGLE OR SPEED
CAPTEUR D'ANGLE DE ROTATION OU DE VITESSE DE ROTATION

(30) Priorität: 23.03.1995 DE 19510579
(43) Veröffentlichungstag der Anmeldung: 12.03.1997
(73) Patentinhaber: INSTITUT FÜR PHYSIKALISCHE HOCHTECHNOLOGIE E.V., 07743 Jena (DE); HL PLANARTECHNIK GMBH, 44227 Dortmund (DE)
(72) Erfinder: ANDRÄ, Wulf, D-07749 Jena (DE); MATTHEIS, Roland, D-07743 Jena (DE)
(74) Vertreter: Pfeiffer, Rolf-Gerd, Dipl.-Phys.
(86) Internationale Anmeldenummer: EP9601248
(87) Internationale Veröffentlichungsnummer: WO9629568

(56) Entgegenhaltungen:
- DE-A- 4 317 512

## Beschreibung

Die Erfindung betrifft einen Drehwinkel- oder Drehzahlgeber gemäß der Gattung des ersten Patentanspruchs, wie er in vielfältigen technischen Gebieten zur berührungslosen Messung von Winkeln bzw. Drehzahlen zur Anwendung gelangt.
Der Erfindung am nächsten kommen dabei Bauformen, die sich zur betrags- und richtungsmäßigen Messung von Magnetfeldern magnetoresistiver Streifenleiter bedienen, die in Form einer Wheatstone-Brücke angeordnet sind (vgl. z.B. DD 256 628, DE 43 17 512). Üblicherweise sind dabei die zum Einsatz gelangenden magnetoresistiven Streifenleiter mit sogenannten Barberpolen versehen, wodurch die MR-Streifenleiter parallel zueinander anordenbar sind, wobei äußere elektromagnetische Störwirkungen reduziert werden.
Die Herstellung solcher Barberpole bedingt nicht nur einen zusätzlichen Kostenaufwand, sondern stellt auch nicht unerhebliche technologische Anforderungen bzgl. der Einhaltung identischer Eigenschaften der Pole untereinander.
Weiterhin ist bereits vorgeschlagen worden (Petersen, A.; "Sensoren zum Messen mechanischer Größen im Kfz", Veranstaltungsunterlage, Essen, 14. + 15.02.1995) zwei, zueinander versetzt angeordnete Wheatstone-Brücken, bei denen die detektierenden Streifenleiter aus magnetoresistivem Material gefertigt sind, zur genannten Meßaufgabe einzusetzen. Bei dieser vorgeschlagenen Ausführung sind die Streifenleiter, bezogen auf die Stromflußrichtung im Streifenleiter, zentralsymmetrisch zu einer Rotationsachse anzuordnen, die einer Rotationsachse eines über den Streifenleitern rotierbaren Permanentmagneten entspricht. Der Nachteil einer solchen Ausbildung besteht darin, daß zusätzlich benötigte elektrische Signale, die anderen Winkelanordnungen entsprechen, nur elektronisch unter Voraussetzung spezieller Annahmen erzeugt werden können.

Der Erfindung liegt daher die Aufgabe zugrunde, einen Drehwinkel- oder Drehzahlgeber bestehend aus einem um eine Achse rotierbaren Permanentmagneten und mehreren Wheatstone-Brücken, deren Widerstandsbrücken aus je vier magnetoresistiven Streifenleitern in Dünnschichtausführung gebildet sind, welche flächig in Ebenen, die parallel zur Rotationsebene des genannten Permanentmagneten ausgerichtet sind, anzugeben, der relativ einfach herstellbar ist und Signale zur Winkeldetektion liefert, die elektronisch eindeutig erfaßbar und leicht auswertbar sind.

Die Aufgabe wird durch die kennzeichnenden Merkmale des ersten Patentanspruchs gelöst. Durch die erfindungsgemäße Art der Anbringung der magnetoresistiven Streifenleiter in Gestalt einer Wheatstone-Brücke und die definierte Anordnung wenigstens dreier solcher Wheatstone-Brücken gelingt es, getrennte elektrische Signale, dieser, um einen definierten Winkel zueinander gedrehten Wheatstone-Brücken zu erhalten. Damit können einfach aufgebaute Baugruppen geschaffen werden, die nur geringe Anforderungen an die Justage und die Feldstärke des eingesetzten Magneten erfordern. Weitere vorteilhafte Ausbildungen der Erfindung sind in den abhängigen Ansprüchen enthalten.

Die Erfindung soll nachstehend anhand schematischer Ausführungsbeispiele näher erläutert werden. Es zeigen:
- Fig. 1: eine schematische Darstellung einer grundsätzlichen Ausführung gemäß vorliegender Erfindung mit drei koaxial verdreht zueinander angeordneten Wheatstone-Brücken,
- Fig. 2: ein zu Figur 1 analoges Ausführungsbeispiel in Draufsicht, bei dem die zum Einsatz gelangenden Wheatstone-Brücken jedoch rotationssymmetrisch um eine Achse Z-Z verteilt angeordnet sind,
- Fig. 3: eine Ausführung gemäß Figur 1 mit schematisch angedeuteter Außenbeschaltung und Mitteln zur Temperaturkompensation,
- Fig. 4a: einen seitlichen Querschnitt durch eine Ausführungsform gemäß der Erfindung, bei der eine Zusatzspule integriert ist,
- Fig. 4b: eine Draufsicht auf die Ausführung gemäß Figur 4a und
- Fig. 5: einen U(ϕ)-Verlauf, wie er mit einer erfindungsgemäßen speziellen Ausbildung zum Einsatz gelangender magnetoresistiver Streifenleiter erzielbar ist.

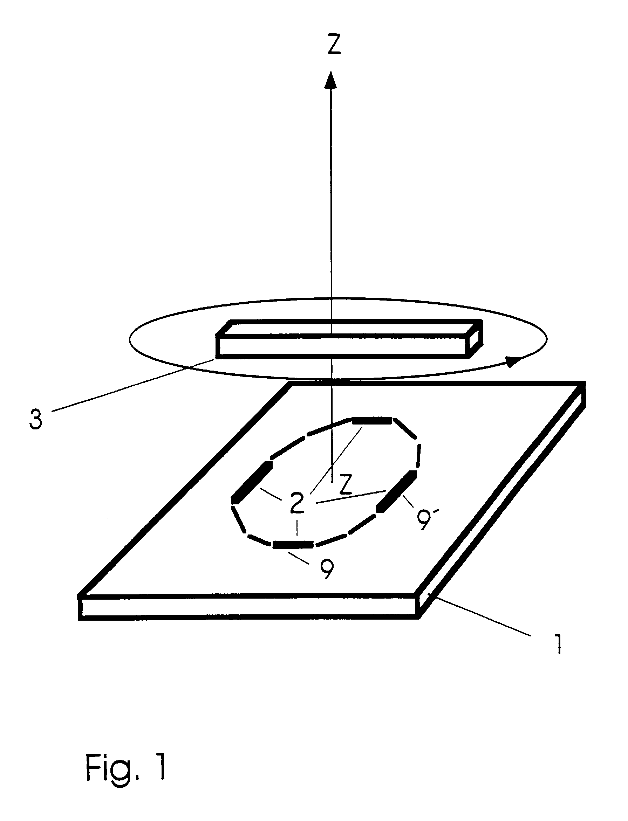

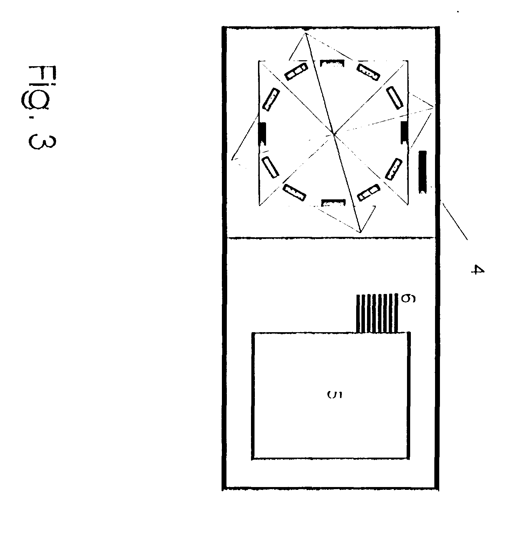

In Fig. 1 sind auf einem Substrat 1, welches durch ein thermisch oxydiertes Siliziumsubstrat gebildet sein kann, drei Wheatstone-Brücken 2 aufgebracht. Die jeweils eine Wheatstone-Brücke bildenden magnetoresistiven Streifenleiter 9, vorteilhaft aus Permalloy bestehend, sind in ihrem Zusammenwirken für eine dieser Brücken fett dargestellt. Im Beispiel erfassen diese Streifenleiter 9 dabei jeweils ein Vieleck in Form eines Quadrats. Dabei ist es ausreichend, wenn sich jeder dieser Streifenleiter 9 nur über einen Teil der Seiten des Quadrats erstreckt, was nicht näher dargestellt ist. Die ebenfalls, durch hier nicht näher dargestellte, gedacht durch das Quadrat gezogene Diagonalen gebildeten Schnittpunkte sind in diesem Ausführungsbeispiel zueinander koaxial angeordnet. (Eine nähere Darstellung genannten Vielecks und genannter Diagonalen, die keine vorrichtungsmäßigen Merkmale sind, sondern nur als konstruktive Hilfslinien dienen, ist in Fig. 3 in Form von Haarlinien vorgenommen.)

Genannte gemeinsame Schnittpunkte fallen dabei mit einer Achse Z-Z zusammen, die die Rotationsachse eines Permanentmagneten 3 darstellt. Bei der Realisierung dieser Ausführungsform ist der Permanentmagnet 3 als Stabmagnet mit einer beispielhaften Länge von ca. 6 mm und einem Durchmesser von ca. 3 mm ausgebildet, welcher über den Wheatstone-Brücken 2 in einem Abstand von ca. 1 mm mittig drehbar gelagert angeordnet ist. Jede Wheatstone-Brücke 2 nimmt dabei eine Fläche von ca. 1 mm² ein. Wesentlich im Rahmen der Erfindung ist, daß jeweils zwei benachbart angeordnete Streifenleiter 9 und 9' zu einer Halbbrücke elektrisch verschaltet sind; vorteilhaft schließen diese Brückenschenkel 9 und 9' dabei einen Winkel von 90° ein.

Alle drei Wheatstone-Brücken können dabei im Rahmen der Erfindung in ihren geometrischen und/oder elektrischen Dimensionierung identisch, als auch voneinander abweichend ausgebildet sein. So wäre es bei vorliegendem Ausführungsbeispiel möglich, die Wheatstone-Brücken so zu strukturieren, daß von innen nach außen die jeweils nächste Brücke die vorhergehende umfaßt, wobei, wie im Beispiel, die Brücken untereinander um jeweils 30° verdreht angeordnet sind. Bei dem der Erfindung zugrundeliegenden Meßprinzip ist, bei allen denkbaren und im weiteren noch zu beschreibenden Ausführungsformen, allerdings wesentlich, daß das jeweilige Layout der Wheatstone-Brücken und die Dimensionierung des Permanentmagneten 3 so gewählt werden, daß alle Wheatstone-Brücken vom Feld des Permanentmagneten 3 in gleicher Weise während dessen Rotation gleichmäßig so erfaßbar sind, daß die magnetoresistiven Streifenleiter magnetisch gesättigt werden.

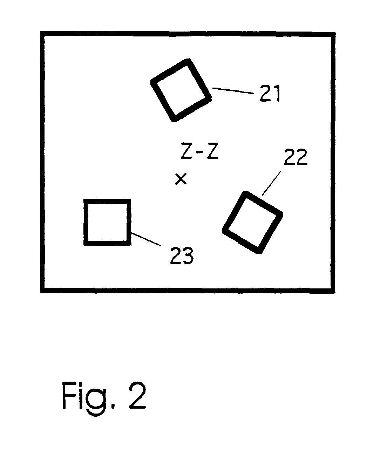

In Figur 2 sind drei Wheatstone-Brücken 21, 22, 23 dargestellt, deren durch gedachte Diagonalen jeweils gebildeten Zentren, in Abweichung zu Figur 1, rotationssymmetrisch um die Achse Z-Z angeordnet sind. Die einzelnen Wheatstone-Brücken sind hierbei wiederum gleichmäßig gegeneinander verdreht und in einem Winkel von 120° um die Achse Z-Z verteilt angeordnet. Diese Verteilung ist eine besonders vorteilhafte Ausbildung, im Sinne der Erfindung, zur Schaffung eines Drehwinkel- oder Drehzahlgebers, der einen Arbeitsbereich von 360° erfassen soll, jedoch ist diese Maßgabe nicht beschränkend.
Sind beispielsweise Winkelgebervorrichtungen zu schaffen, was analog auch für Ausführungen gemäß Fig. 1 gilt, die nur einen kleineren Winkelbereich erfassen sollen, dann können mit der Maßgabe einer Wheatstone-Brückenanzahl n, mit n ≥ 3, andere Verdrehungswinkel der Brücken untereinander entsprechend (90 - β)°/n, wobei 0° < β ≤ 60° ist, festgelegt sein.

In Figur 3 ist in Draufsicht eine Ausführung gemäß Figur 1 mit schematisch angedeuteter Außenbeschaltung und Mitteln zur Temperaturkompensation dargestellt. Aus Gründen der Übersichtlichkeit wurde auf die detaillierte Darstellung von rein elektrischen Verschaltungsmitteln verzichtet. Die Streifenleiter 9, die zu je einer Wheatstone-Brücke 21, 22, 23 verschaltet sind, sind mit unterschiedlichen Schraffierungen dargestellt. Mittels einer ebenfalls auf dem Substrat 1 integrierbaren elektronischen Schaltung 5, die bspw. als kundenspezifischer Schaltkreis ausgebildet sein kann, ist neben einer Auswertung der Signale der einzelnen Wheatstone-Brücken 21, 22, 23, die bei Rotation des Permanentmagneten 3 entstehen, auch eine zyklische Vertauschung der jeweiligen Wheatstone-Brückenabgriffe realisierbar. Desweiteren kann vorteilhaft ein weiterer magnetoresistiver Streifenleiter 4 zur Temperaturkompensation auf dem Substrat 1 vorgesehen sein. Die jeweiligen Verschaltungen aller Baugruppen erfolgen im übrigen über schematisch angedeutete Zuleitungen 6.

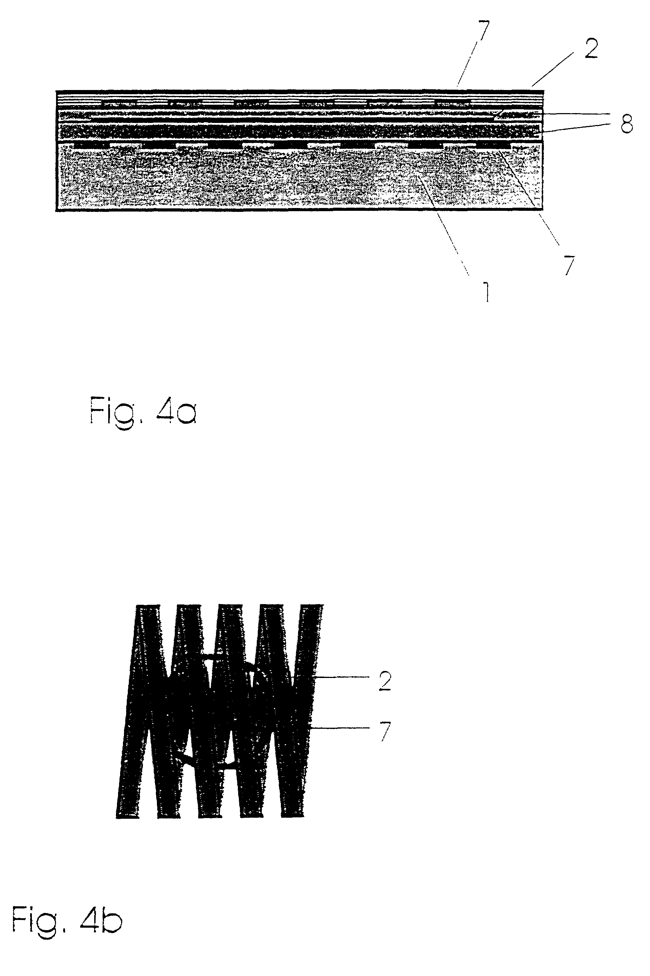

Die bisher beschriebenen Anordnungen ermöglichen eine eineindeutige Zuordnung der Meßsignale in einem Winkelbereich von 0° bis 180°. Durch die Einwirkung eines Zusatzfeldes kann der eineindeutig zuordenbare Winkelbereich auf 0° bis 360° erweitert werden.
Entsprechend der Darstellung in den Figuren 4a (seitlicher Querschnitt) und 4b (Draufsicht auf 4a) ist, getrennt durch entsprechende Isolatorschichten 8, wenigstens eine Zusatzfeldspule 7 derart integrierbar, daß sie alle Wheatstone-Brücken 2 umfaßt. Diese Zusatzfeldspule 7 ist entweder mit einem Wechselstrom oder mit Stromimpulsen zu definiert vorgebbaren Zeitpunkten beaufschlagbar. Die Dimensionierung bzw. Strombeaufschlagung der Zusatzfeldspule Sollte so festgelegt sein, daß das auf die MR-Streifenleiter der Wheatstone-Brücken einwirkende magnetische Feld in der Größenordnung von einem Zwanzigstel bis zur Hälfte der Feldstärke des Permanentmagneten 3 beträgt. Ebenso liegt es natürlich im Rahmen der Erfindung, genannte Zusatzfeldspule durch zwei, jeweils in unterschiedlichen Ebenen angeordnete spiralförmige Spulen mit geeignetem magnetischen Wickelsinn auszubilden, was bezüglich deren mikrolithografischer Strukturierung vorteilhaft ist.
Durch das, durch genannte Zusatzfeldspule, erzeugte zusätzliche magnetische Feld, ist die Magnetisierungsrichtung in den MR-Streifenleitern 9, die im wesentlichen durch die jeweilige Stellung des Permanentmagneten 3 bestimmt wird, um einen gewissen meßbaren Betrag zusätzlich ablenkbar, das Vorzeichen der Signaländerung, die durch das Zusatzfeld erzeugt wird, enthält die Information über die Richtung des Permanentmagneten 3.

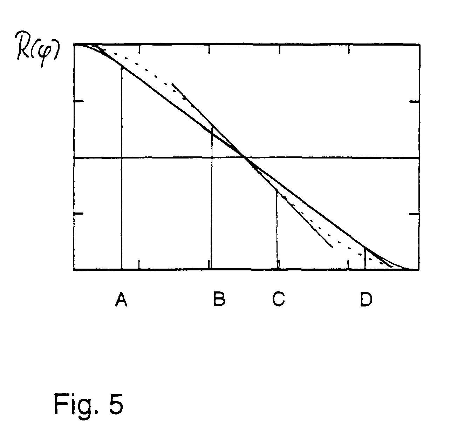

In Figur 5 ist schließlich ein U(ϕ)-Verlauf über eine halbe Periode dargestellt, wie er mit einer speziellen erfindungsgemäßen Ausbildung der zum Einsatz gelangenden MR-Streifenleiter 9 erzielbar ist. Die Ausbildung der MR-Streifenleiter erfolgt dabei, mit der Maßgabe, daß das Feld des Permanentmagneten, das auf die Wheatstone-Brücken einwirkt ein 3 bis 6faches des Anisotropiefeldes der Streifenleiter beträgt, wobei den Streifenleitern ein Länge/Breiten-Verhältnis von größer 10 : 1, bei einer Breite unterhalb 4 µm und einer Dicke in der Größenordnung größer gleich 20 nm, gegeben ist. In Fig. 5 ist dabei deutlich erkennbar, daß ein reines Sinussignal, welches strichpunktiert dargestellt ist und bspw. bei gleichem Feld des Permanentmagneten und einer Streifenleiterbreite von ca. 10 µm erhalten wird, lediglich zwischen den Punkten B und C einen linearen Verlauf aufweist, wohingegen gemäß Anspruch 12 vorliegender Erfindung ausgebildete Streifenleiter zwischen den Punkten A und D einen wesentlich größeren linearen Bereich zeigen, was sich besonders vorteilhaft bei der Signalverarbeitung und -auswertung auswirkt.

Alle Ausführungen des erfindungsgemäßen Drehwinkel- oder Drehzahlgebers sind für eine sehr schnelle Detektion bis in hohe Frequenzbereiche, z.B. in der Größenordnung von 10 MHz, anwendbar.

Es liegt weiterhin im Rahmen der Erfindung, ohne daß dies näher dargestellt ist, jeder zum Einsatz gelangenden Wheatstone-Brücke jeweils mindestens eine Widerstandsabgleichfläche zuzuordnen, was im Rahmen von Mikrostrukturierungstechniken problemlos realisierbar ist.

Weiterhin liegt es im Rahmen der Erfindung, jeden einzelnen MR-Streifenleiter 9 durch Hintereinanderschaltung mehrerer, ggf. unterschiedlich langer, zueinander parallel verlaufender MR-Streifenleiter auszubilden. Mit Hilfe diese Maßgabe gelingt es, den auf dem Substrat zur Verfügung stehenden Platz effektiv auszunutzen. Sämtliche sonstigen Maßgaben der Erfindung bleiben bei einer derartigen Ausbildung der MR-Streifenleiter weiterhin bestehen.

### Bezugszeichenliste

- 1 -: Substrat
- 2,21,22,23 -: Wheatstone-Brücken
- 3 -: Permanentmagnet
- 4 -: MR-Streifenleiter zur Temperaturkompensation
- 5 -: Auswerteelektronik
- 6 -: Zuleitungen (schematisch)
- 7 -: Zusatzfeldspule
- 8 -: Isolatorschicht
- 9, 9' -: MR-Streifenleiter
- Z-Z -: Rotationsachse

## Patentansprüche

1. Drehwinkel- oder Drehzahlgeber bestehend aus einem um eine Achse (Z-Z) rotierbaren Permanentmagneten (3) und mindestens drei Wheatstone-Brücken (2, 21, 22, 23), wobei die Widerstandsbrücken der genannten Wheatstone-Brücken aus je vier magnetoresistiven Streifenleitern (9,9') in Dünnschichtausführung gebildet sind, welche flächig in Ebenen parallel zur Rotationsebene des genannten Permanentmagneten (3) angeordnet sind, und bei der jeweils zwei benachbart angeordnete Streifenleiter zu einer Halbbrücke genannter Wheatstone-Brücke verschaltet sind, dadurch gekennzeichnet, daß je vier, eine Wheatstone-Brücke bildende Streifenleiter (9, 9') die Seiten eines Vierecks erfassen, wobei sich jeder der vier Streifenleiter bezüglich seiner Längserstreckungsrichtung zumindest über einen Teil einer zugeordneten Seite des Vierecks erstreckt, und wobei jeder Seite des Vierecks genau ein Streifenleiter zugeordnet ist, und die genannten Vierecke gegeneinander um einen vorgebbaren Winkel a verdreht angeordnet sind, wobei die von den durch die genannten Vierecke gedacht gezogenen Diagonalen gebildeten Schnittpunkte im wesentlichen konzentrisch zur Rotationsachse (Z-Z) des Permanentmagneten (3) angeordnet sind, und wobei die genannten Wheatstone-Brücken ausschließlich vom Feld des Permanentmagneten (3) in gleicher Weise während der Rotation des Permanentmagneten (3) gleichmäßig so erfaßbar sind, daß die magnetoresistiven Streifenleiter (9, 9') magnetisch gesättigt sind.

2. Drehwinkel- oder Drehzahlgeber gemäß Anspruch 1., dadurch gekennzeichnet, daß die von durch genannte Vierecke gedacht gezogenen Diagonalen gebildeten Schnittpunkte untereinander und mit genannter Rotationsachse (Z-Z) des Permanentmagneten (3) koaxial zusammenfallend angeordnet sind.

3. Drehwinkel- oder Drehzahlgeber gemäß Anspruch 1., dadurch gekennzeichnet, daß die von durch genannte Vierecke gedacht gezogenen Diagonalen gebildeten Schnittpunkte rotationssymmetrisch um genannte Rotationsachse (Z-Z) des Permanentmagneten (3) angeordnet sind.

4. Drehwinkel- oder Drehzahlgeber gemäß einem der Ansprüche 1. bis 3., dadurch gekennzeichnet, daß genannte, benachbart angeordnete und zu einer Halbbrücke verschaltete Streifenleiter (9, 9') einen Winkel von 90° einschließen.

5. Drehwinkel- oder Drehzahlgeber gemäß einem der Ansprüche 1. bis 4., dadurch gekennzeichnet, daß genannte Streifenleiter, die je eine Wheatstone-Brücke (2,21,22,23) bilden, bevorzugt ein Quadrat umfassen.

6. Drehwinkel- oder Drehzahlgeber gemäß einem der Ansprüche 1. bis 5., dadurch gekennzeichnet, daß die geometrische Ausbildung und/oder elektrische Dimensionierung genannter Wheatstone-Brücken (2,21,22,23) untereinander identisch festgelegt ist.

7. Drehwinkel- oder Drehzahlgeber gemäß einem der Ansprüche 1, bis 5., dadurch gekennzeichnet, daß die geometrische Ausbildung und/oder elektrische Dimensionierung genannter Wheatstone-Brücken (2,21,22,23) voneinander abweichend festgelegt ist.

8. Drehwinkel- oder Drehzahlgeber gemäß einem der vorstehenden Ansprüche, dadurch gekennzeichnet, daß genannte Wheatstone-Brücken (2,21,22,23) in mehreren, voneinander elektrisch isolierten Ebenen angeordnet sind.

9. Drehwinkel- oder Drehzahlgeber gemäß einem der vorstehenden Ansprüche, dadurch gekennzeichnet, daß bei Einsatz von n Wheatstone-Brücken (2,21,22,23), wobei n ≥ 3 ist, genannter Winkel α, um den die Wheatstone-Brücken gegeneinander verdreht angeordnet sind, zu jeweils 90°/n festgelegt ist.

10. Drehwinkel- oder Drehzahlgeber gemäß einem der vorstehenden Ansprüche, dadurch gekennzeichnet, daß bei Einsatz von n Wheatstone-Brücken (2,21,22,23), wobei n ≥ 3 ist, genannter Winkel α, um den die Wheatstone-Brücken gegeneinander verdreht angeordnet sind, zu jeweils (90 - β)°/n, wobei β zwischen 0° < β ≤ 60° festgelegt ist.

11. Drehwinkel- oder Drehzahlgeber gemäß einem der vorstehenden Ansprüche, dadurch gekennzeichnet, daß genannte magnetoresistive Streifenleiter (9,9') jeweils aus mehreren zueinander parallel angeordneten, miteinander elektrisch verbundenen einzelnen magnetoresistiven Streifenleiterabschnitten gebildet sind.

12. Drehwinkel- oder Drehzahlgeber gemäß einem der Ansprüche 1 bzw. 4 bis 11, dadurch gekennzeichnet, daß das Feld des Permanentmagneten (3), das auf die Wheatstone-Brücken (2,21,22,23) einwirkt ein 3 bis 6faches des Anisotropiefeldes der Streifenleiter beträgt, wobei den Streifenleitern ein Länge/Breiten-Verhältnis von größer 10 : 1 gegeben ist.

13. Drehwinkel- oder Drehzahlgeber gemäß Anspruch 12, dadurch gekennzeichnet, daß genannten Streifenleitern (9,9') eine Breite unterhalb 4 um und eine Dicke in der Größenordnung größer gleich 20 nm, gegeben ist.

14. Drehwinkel- oder Drehzahlgeber gemäß einem der vorstehenden Ansprüche, dadurch gekennzeichnet, daß jeder genannter Wheatstone-Brücken (2,21,22,23) mindestens eine gesonderte Widerstandsabgleichfläche zugeordnet ist.

15. Drehwinkel- oder Drehzahlgeber gemäß einem der vorstehenden Ansprüche, dadurch gekennzeichnet, daß genannte, auf einem Trägersubstrat (1) angeordnete Wheatstone-Brücken (2,21,22,23) von mindestens einer Zusatzfeldspule (7) umfaßt sind.

16. Drehwinkel- oder Drehzahlgeber gemäß Anspruch 15., dadurch gekennzeichnet, daß die Zusatzfeldspule (7) in oder auf genanntes Trägersubstrat (1) mit integriert ist.

17. Drehwinkel- oder Drehzahlgeber gemäß Anspruch 15. oder 16., dadurch gekennzeichnet, daß die Zusatzfeldspule (7) mit einem Wechselstrom beaufschlagbar ist.

18. Drehwinkel- oder Drehzahlgeber gemäß Anspruch 15. oder 16., dadurch gekennzeichnet, daß die Zusatzfeldspule (7) zu definiert vorgebbaren Zeitpunkten mit einem Stromimpuls beaufschlagbar ist.

## Claims

1. Rotation angle sensor and speed sensor, respectively, comprising a permanent magnet (3) rotatable about an axis (Z-Z) and at least three Wheatstone bridges (2, 21, 22, 23), wherein the bridge resistors of said Wheatstone bridges being constituted of four magnetoresistive strip conductors (9, 9') each being embodied in thin layer technique extending in flat planes parallel to the rotation plane of said permanent magnet (3), and in which respective two adjacently arranged strip conductors are circuit connected to a half-bridge of said Wheatstone bridge,
characterized in that each four of said strip conductors (9, 9') constituting a respective Wheatstone bridge include the sides of a quadrangle, whereby with respect to the direction of longitudinal extension each of said four strip conductors extends at least over a portion of the side of the quadrangle to which it is associated, and whereby each side of said quadrangle is associated to exactly one strip conductor, and said quadrangles being arranged mutually rotated by a preselectable angle α, the intersection points of the fictitious diagonals drawn across said quadrangles being arranged substantially concentrically about said axis of rotation (Z-Z) of the permanent magnet (3), and whereby said Wheatstone bridges being exclusively, and in the same manner, and uniformly swept by the field of the permanent magnet (3) in the course of rotation, so that said magnetoresistive strip conductors (9, 9') are magnetically saturated.

2. Rotation angle sensor and speed sensor, respectively, according to claim 1, wherein said intersection points formed by the fictitiously drawn diagonals across said quadrangles are arranged for coaxially coinciding with one another and with the axis of rotation (Z-Z) of said permanent magnet (3).

3. Rotation angle sensor and speed sensor, respectively, as claimed in claim 1, wherein said intersection points formed by the fictitiously drawn diagonals across said quadrangles are rotation symmetrically arranged about said axis of rotation (Z-Z) of said permanent magnet (3).

4. Rotation angle sensor and speed sensor, respectively, as claimed in any of the claims 1 to 3, wherein said adjacently arranged and circuit connected half-bridges of said strip conductors (9, 9') include an angle of 90°.

5. Rotation angle sensor and speed sensor, respectively, as claimed in any of the preceding claims 1 to 4, wherein said strip conductors constituting each one Wheatstone bridge (2, 21, 22, 23) preferably include a square.

6. Rotation angle sensor and speed sensor, respectively, as claimed in any of the preceding claims 1 to 5, wherein the geometry and/or the electric dimensioning of said Wheatstone bridges (2, 21, 22, 23) is/are selected to be identical to one another.

7. Rotation angle sensor and speed sensor, respectively, as claimed in any of the preceding claims 1 to 5, wherein the geometry and/or the electric dimensioning of said Wheatstone bridges (2, 21, 22, 23) is/are selected to be different from one another.

8. Rotation angle sensor and speed sensor, respectively, as claimed in any of the preceding claims, wherein said Wheatstone bridges (2, 21, 22, 23) are arranged in a plurality of planes electrically insulated from one another.

9. Rotation angle sensor and speed sensor, respectively, as claimed in any of the preceding claims, wherein said angle α by which the Wheatstone bridges are mutually and rotationally displaced is each selected to be 90°/n with n Wheatstone bridges (2, 21, 22, 23) employed, with n ≥ 3.

10. Rotation angle sensor and speed sensor, respectively, as claimed in any of the preceding claims, wherein, with n Wheatstone bridges (2, 21, 22, 23) employed, where n is ≥3, said angle α by which the Wheatstone bridges are mutually and rotationally displaced is determined to (90-β)°/n each, where β lies between 0°<β≤60°.

11. Rotation angle sensor and speed sensor, respectively, as claimed in any of the preceding claims, wherein each of said magnetoresistive strip conductors (9, 9') is constituted of a plurality of individual magnetoresistive strip conductor portions in parallel to and electrically connected with one another.

12. Rotation angle sensor and speed sensor, respectively, as claimed in any of the claims 1 and 4, respectively, to 11, wherein the field of the permanent magnet (3) affecting the Wheatstone bridges (2, 21, 22, 23) is treble to sixfold the anisotropic field of the strip conductors, where the strip conductors have a length-to-width ratio greater 10.

13. Rotation angle sensor and speed sensor, respectively, as claimed in claim 12, wherein said strip conductors (9, 9') have a width below 4 µm and a thickness in the order of size of greater equal 20nm.

14. Rotation angle sensor and speed sensor, respectively, as claimed in any of the preceding claims, wherein at least one special balancing resistance face is associated to each of said Wheatstone bridges (2, 21, 22, 23).

15. Rotation angle sensor and speed sensor, respectively, as claimed in any of the preceding claims, wherein said Wheatstone bridges (2, 21, 22, 23) arranged on a carrier substrate (1) are encompassed by at least one additional field coil (7).

16. Rotation angle sensor and speed sensor, respectively, as claimed in claim 15, wherein said additional field coil (7) is integrated in or on said carrier substrate (1).

17. Rotation angle sensor and speed sensor, respectively, as claimed in claim 15 or 16, wherein said additional field coil (7) is pulseable by an alternating current.

18. Rotation angle sensor and speed sensor, respectively, as claimed in claim 15 or 16, wherein said additional field coil (7) is pulseable by a current pulse applied at preselected definite points of time.

## Revendications

1. L'encodeur angulaire et de vitesse de rotation composé d'un aimant permanent (3) étant capable de se mettre en rotation autour d'un axe (Z-Z), et d'au moins trois ponts Wheatstone 2 (2, 21, 22, 23) dont les ponts de résistances comprennent chacun quatre guides d'ondes à ruban (9, 9') réalisés en couches minces et disposés sur différents plans parallèle au niveau de rotation de l'aimant permanent précité (3), deux guides d'ondes à ruban voisins formant un demi-pont du pont Wheatstone, **est caractérisé en ce que** chaque fois quatre guides d'ondes à ruban (9,9') formant un pont Wheatstone, saisissent les côtés d'un carré, chacun des quatre guides d'ondes à ruban s'étendant dans le sens longitudinal sur au moins une partie d'un côté attribué du carré, à chacun des côté est un guide d'ondes à ruban étant attribué, et les carrés précités sont disposés de manière décalée dans un angle prédéterminable α, les points d'intersection des diagonales imaginées passant par les carrés précités, disposés de manière concentrique par rapport à l'axe de rotation ( Z-Z) de l'aimant permanent (3), et les ponts Wheatstone étant exposé au champ de l'aimant permanent (3) de la même façon, comme pendant la rotation de l'aimant permanent (3), pour que les guides d'ondes à ruban magnétorésistants (9,9') soient magnétisés à saturation.

2. L'encodeur angulaire et de vitesse de rotation selon la revendication 1 est caractérisé en ce que les points d'intersection des diagonales imaginaires passant par les carrés indiquées sont disposés de manière coaxiale et formant un angle les uns par rapport aux autres et par rapport à l'axe de rotation (Z-Z) de l'aimant permanent (3).

3. L'encodeur angulaire et de vitesse de rotation selon la revendication 1 est caractérisé en ce que les points d'intersection des diagonales imaginaires passant par les carrés en question sont disposés en suivant la symétrie de rotation, autour de l'axe de rotation (Z-Z) de l'aimant permanent (3).

4. L'encodeur angulaire et de vitesse de rotation selon une des revendications 1 à 3 est caractérisé en ce que les guides d'ondes à ruban (9,9'), disposés les uns à côté des autres et formant un demi-pont, enferment un angle de 90°.

5. L'encodeur angulaire et de vitesse de rotation selon une des revendications 1 à 4 est caractérisé en ce que les guides d'ondes à ruban qui formant chacun un pont Wheatstone (2,21,22,23), enferment un carré.

6. L'encodeur angulaire et de vitesse de rotation selon une des revendications 1 à 5 est caractérisé en ce que la conception géométrique et/ou le dimensionnement électrique des ponts Wheatstone (2,21,22,23) est/sont identique/s pour tous les ponts Wheatstone.

7. L'encodeur angulaire et de vitesse de rotation selon une des revendications 1 à 5 est caractérisé en ce que la conception géométrique et/ou le dimensionnement électrique des ponts Wheatstone (2,21,22,23) sont différents pour chacun des ponts Wheatstone (2,21,22,23).

8. Le capteur d'angle de rotation ou de vitesse de rotation selon une des revendications ci-dessus est caractérisé en ce que les ponts Wheatstone (2,21,22,23) sont disposés sur des niveaux différents et qu'il sont électriquement isolés les uns par rapport aux autres.

9. L'encodeur angulaire et de vitesse de rotation selon une des revendications ci-dessus est caractérisé en ce que dans le cas de l'emploi de n ponts Wheatstone (2,21,22,23), n étant> 3, l'angle α autour duquel les ponts Wheatstone sont disposés de manière décalée les uns par rapport aux autres, est défini pour chacun des ponts Wheatstone à 90°/n.

10. L'encodeur angulaire et de vitesse de rotation selon une des revendications ci-dessus est caractérisé en ce que dans le cas de l'emploi de n ponts Wheatstone (2,21,22,23), n étant ≥ 3, l'angle α autour duquel les ponts Wheatstone sont disposés de manière décalée les uns par rapport aux autres, est défini pour chacun des ponts Wheatstone à (90 - β)°/n, β étant défini à 0°<β≤60°.

11. L'encodeur angulaire et de vitesse de rotation selon une des revendications ci-dessus est caractérisé en ce que les guides d'ondes à ruban magnétorésistants (9, 9') sont chacun formés de plusieurs sections individuelles de guides d'ondes à ruban, disposées en parallèle les unes par rapport aux autres et électriquement liées entre elles.

12. L'encodeur angulaire et de vitesse de rotation selon une des revendications 1 ou 4 à 11 est caractérisé en ce que le champ de l'aimant permanent (3) auquel les ponts Wheatstone (2,21,22,23) sont exposés, est 3 à 6 fois plus intense que le champ anisotropique des guides d'ondes à ruban , dont le rapport longueur/largeur est supérieur à 10 : 1.

13. L'encodeur angulaire et de vitesse de rotation selon la revendication 12 est caractérisé en ce que la largeur des guides d'ondes à ruban (9,9') est inférieure à 4 µm et l'épaisseur supérieure ou égale à 20nm.

14. L'encodeur angulaire et de vitesse de rotation selon une des revendications ci-dessus est caractérisé en ce qu'à chacun des ponts Wheatstone (2,21,22,23) est attribué une surface d'égalisation de la résistance.

15. L'encodeur angulaire et de vitesse de rotation selon une des revendications ci-dessus est caractérisé en ce que les ponts Wheatstone (2,21,22,23) disposés sur un substrat support (1) sont saisis par au moins une bobine de champ supplémentaire (7).

16. L'encodeur angulaire et de vitesse de rotation selon la revendication 15 est caractérisé en ce que la bobine de champ supplémentaire (7) est intégrée dans ou sur le substrat support (1).

17. L'encodeur angulaire et de vitesse de rotation selon les revendications 15 ou 16 est caractérisé en ce qu'il est possible d'appliquer un courant alternatif à la bobine de champ supplémentaire (7).

18. L'encodeur angulaire ou de vitesse de rotation selon les revendications 15 ou 16 est caractérisé en ce qu'il est possible d'appliquer à un instant prédéfini une impulsion de courant à la bobine de champ supplémentaire (7).
